# EUROPEAN PATENT APPLICATION

(11) **EP 3 048 790 A1**
(43) Date of publication of application: **27.07.2016**
(21) Application number: 13893950.9
(22) Date of filing: 20.09.2013
(51) Int. Cl.: H04N 7/18

(54) **VIDEO MONITORING SYSTEM AND VIDEO DISPLAY METHOD**

(71) Applicant: Hitachi Kokusai Electric Inc., Tokyo 101-8980 (JP)
(72) Inventor: TAKEDA Takashi, Kodaira-shi Tokyo 187-8511 (JP)
(74) Representative: Strehl Schübel-Hopf & Partner
(86) International application number: PCT/JP2013/075442
(87) International publication number: WO 2015/040732

(57) **Abstract**

This video monitoring system is configured in a manner so as to be provided with: a monitor device that displays a video captured by a camera; a map display means that displays a map containing a plurality of camera icons; a camera icon reception means that, when a plurality of the camera icons on the map displayed by the map display means are selected in sequence by an operator, receives the plurality of selected camera icons; a used-camera determination means that determines cameras corresponding to the camera icons received by the camera icon reception means to be used cameras used for video display in the monitor device; a partition count determination means that determines the split screen partition count for the monitor device in accordance with the camera icon count received by the camera icon reception means; and a monitor video signal formation means that, on the basis of the used camera determined by the used-camera determination means and the split screen partition count determined by the partition count determination means, forms a monitor video signal used by the monitor device.

## Description

### Technical Field

The present invention relates to a video monitoring system and a video display method. More specifically, the present invention relates to a technique of selecting a desired monitor camera among many of them.

### Background Art

Many monitor cameras (hereinafter simply referred to as camera) have been installed in various locations for the security purpose and provision of the peripheral situation so that the video taken by the camera is monitored (see Patent Literature 1).

The following methods (a) to (c) have been generally employed for selecting monitor videos from a plurality of cameras, in other words, methods of selecting the desired camera among many of them.
(a) Method of selecting the camera one by one in accordance with the camera name registered in the list;
(b) Method of selecting the camera one by one in accordance with camera icons registered in the area map (the camera icon displayed on the area map is clicked one by one in sequence); and
(c) Method of automatically selecting the camera in association with the relevant device (various alarms, sensors) in response to an alarm generated thereby.

A monitor device for displaying the video taken by the camera is configured to improve display efficiency on the single monitor screen by way of split screen display (the single monitor screen is split into a plurality of sections so that a plurality of camera videos are displayed simultaneously), and automatic switch display (the designated camera videos are automatically switched on the single monitor screen every few seconds).

The method of setting and displaying the split screen on the monitor screen has been generally implemented in the following manner.

Firstly, a split screen pattern is preliminarily set to register the pattern corresponding to the number of the split screen sections (for example, 4-section, 9-section, 16-section). For each pattern corresponding to the number of split screen sections, the camera to be used for display (cameras A, B, and the like) is allocated to the corresponding section on the split screen so that the operator selects the split screen pattern to be used. For example, clicking any one of select buttons among 4-section/9-section/16-section patterns for selecting the desired pattern allows determination of the camera corresponding to the split screen pattern to be displayed.

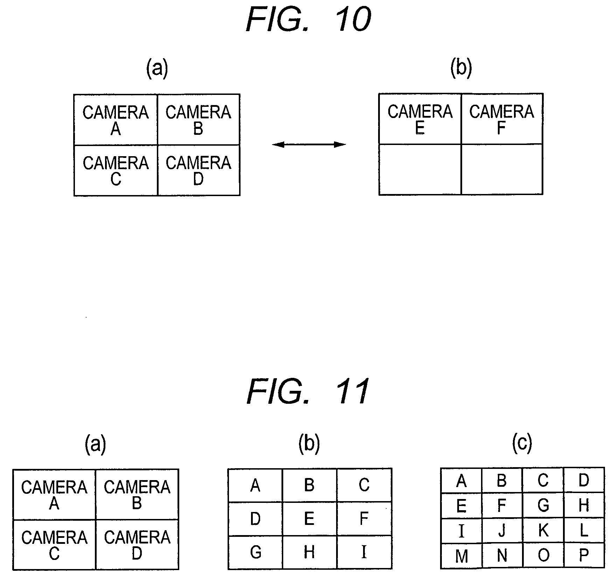

Fig. 11 shows examples of the split screen display as the generally employed art. Referring to Fig. 11 (a), the cameras A to D are allocated to the corresponding 4 split sections. Referring to Fig. 11(b), the cameras A to I are allocated to the corresponding 9 split sections. Referring to Fig. 11(c), the cameras A to P are allocated to the corresponding 16 split sections.

At present, the method of setting and displaying the automatic switch screen on the monitor screen is implemented as follows.

Firstly, the automatic switch pattern, that is, the order of cameras for display is preliminarily set. For example, the camera A is set to be displayed first, then the camera B is set to be displayed next, and the camera L is set as the last camera for display. Upon selection of the automatic switch screen by the operator (for example, by pressing the automatic switch select button), videos taken by the cameras from A to L will be displayed on the monitor screen sequentially. After the video of the camera L is displayed, the screen displays the video of the camera A again. The aforementioned display will be performed repeatedly.

Upon selection of the camera through the aforementioned camera selection method, in most cases, the following process steps (1) and (2) may be performed for further confirmation of circumstances after the selection.
(1) The video of the selected camera has been determined as good for observing the circumstances. However, it is switched to the video taken by the camera adjacent to the selected one for obtaining further circumferential information expected to be better for observation.
(2) Even after selection, direction and range of monitoring the selected camera are adjusted by such operation as zooming in accordance with the latest circumstances.

As described above, in most cases, the above-described operations are performed in order to obtain more information on the circumstances of the area by monitoring the video of the selected camera together with that of the camera adjacent to the selected one. The adjacent camera may be the one next to the selected camera laterally (left and right) or vertically (upper and lower). Alarm generated from a certain camera interlocked with the sensor of the relevant device may also cause the similar needs.

Concerning the method of displaying the split screen or the automatic switch screen on the monitor, further demands have been made, for example, the split screen for display is required to be changed more conforming to the circumstances, the automatic switch order is required to be changed more conforming to the circumstances, or the cameras for automatic switching are required to be configured more conforming to the circumstances. As the number of the cameras increases, setting of the split screen and the automatic switch screen may be complicated. Those settings have been demanded to be carried out more simply and efficiently.

### Citation List

### Patent Literature

PTL 1: JP-A-2006-67139

### Summary of Invention

### Technical Problem

An object of the present invention is to provide the technique of selecting the camera required for monitoring more appropriately and simply.

### Solution to Problem

The first aspect of the video monitoring system according to the present invention includes a monitor device for displaying a video taken by a camera, a map display unit for displaying a map which contains a plurality of camera icons, a camera icon reception unit for receiving the plurality of camera icons on the map displayed by the map display unit, which have been selected by an operator sequentially, a used camera determination unit for determining the camera corresponding to the camera icon received by the camera icon reception unit as a camera used for video display on the monitor device, a section count determination unit for determining the number of split screen sections of the monitor device in accordance with the number of the camera icons received by the camera icon reception unit, and a monitor video signal forming unit for generating a monitor video signal used for the monitor device based on the used camera determined by the used camera determination unit, and the number of split screen sections determined by the section count determination unit.

The second aspect of the video monitoring system according to the present invention includes a monitor device for displaying a video taken by a camera, a map display unit for displaying a map which contains a plurality of camera icons, a camera icon reception unit for receiving the plurality of camera icons on the map displayed by the map display unit, which have been selected by an operator sequentially, a used camera determination unit for determining the camera corresponding to the camera icon received by the camera icon reception unit as a camera used for video display on the monitor device, a display section determination unit for determining a display section on a split screen of the monitor device in accordance with a reception order of the camera icons received by the camera icon reception unit, and a monitor video signal formation unit for generating a monitor video signal used for the monitor device based on a used camera determined by the used camera determination unit, and the display section determined by the display section determination unit.

The third aspect of the video monitoring system according to the present invention includes a monitor device for displaying a video taken by a camera, a map display unit for displaying a map which contains a plurality of camera icons, a camera icon reception unit for receiving the plurality of camera icons on the map displayed by the map display unit, which have been selected by an operator sequentially, a used camera determination unit for determining the camera corresponding to the camera icon received by the camera icon reception unit as a camera used for video display on the monitor device, a display order determination unit for determining an automatic switch order of videos on the screen of the monitor device in accordance with a reception order of the camera icons received by the camera icon reception unit, and a monitor video signal formation unit for generating a monitor video signal used for the monitor device based on the used camera determined by the used camera determination unit, and a display order determined by the display order determination unit. Advantageous Effects of Invention

The aforementioned structure allows selection of the camera required for monitoring more appropriately and simply.

### Brief Description of Drawings

Fig. 1 is a view representing structure of a video monitoring system according to an embodiment of the present invention.
Fig. 2 is a functional block diagram of a control device according to the embodiment of the present invention.
Fig. 3 is a functional block diagram of a recording device according to the embodiment of the present invention.
Fig. 4 is a functional block diagram of an operation display device according to an embodiment of the present invention.
Fig. 5 is a view representing area camera information according to the embodiment of the present invention.
Fig. 6 is a view representing selection of the camera according to first and second examples.
Fig. 7 is a view representing an automatic switch screen display according to the first example.
Fig. 8 is a view representing a split screen display according to the second example.
Fig. 9 is an explanatory view with respect to the camera selection method according to the second example in detail.
Fig. 10 is a view representing a multi-page switch display according to a third example.
Fig. 11 is a view representing a split screen display according to a generally employed art.

### Description of Embodiment

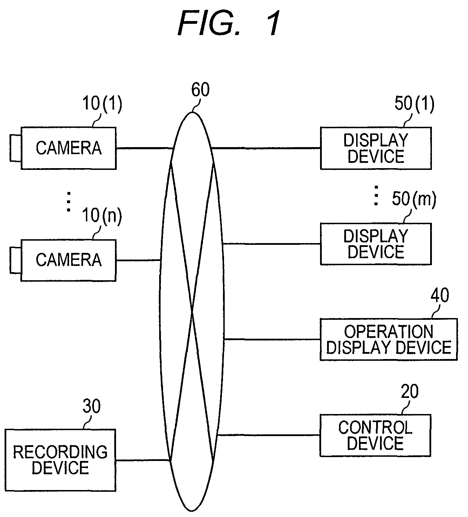

The video monitoring system according to an embodiment of the present invention will be described referring to Fig. 1. Fig. 1 is a view representing structure of the video monitoring system according to the embodiment of the present invention.

As Fig. 1 shows, the video monitoring system of the embodiment includes cameras 10(1) to 10(n), display devices 50(1) to 50(m) each as a monitor device for displaying videos taken by the cameras 10 (1) to 10 (n), respectively, a recording device 30 for recording videos taken by the cameras 10(1) to 10(n), an operation display device 40 for receiving various instructions from an operator, and a control device 20 which controls determination as to selection of the display device 50, and the camera 10, the video taken by which is displayed on the selected display device. Each of codes n and m denotes a natural number. The cameras 10, the control device 20, the recording device 20, the operation display device 40 and the display devices 50 are connected with one another for allowing communication by way of signals via a network 60 such as internet.

When generally calling the cameras 10(1) to 10 (n) with no need of distinction, it will be simply referred to as the camera 10. Likewise, when generically calling the display devices 50(1) to 50(m), it will be simply referred to as the display device 50. A plurality of display devices 50 are used in an example shown in Fig. 1. However, it is possible to use the single display device 50. It is also possible to employ a plurality of recording devices 30.

### (Outline of operation example of video monitoring system)

An outline of the operation example of the video monitoring system according to the embodiment will be described. The operator designates a plurality of cameras 10 used for monitoring, a designation order of those cameras 10, the display device 50 for displaying videos taken by the cameras 10, and a display pattern such as split screen display and automatic switch screen display. The split screen display represents that the videos taken by the cameras 10 are displayed on the corresponding split sections (split positions) on the split screen of the single monitor screen, respectively. The automatic switch screen display represents that videos taken by the cameras 10 are automatically switched in sequence every few seconds so as to be displayed on the single monitor screen.

If the split screen display is designated, the control device 20 determines the split screen pattern in accordance with the number of the designated cameras, and section position on the split screen on which each video of the cameras is displayed based on the camera designation order. Based on the thus determined split screen pattern, the section position on the split screen, and the designated cameras, the monitor video signal is generated for the split screen display, which is output to the display device 50.

For example, upon designation of the cameras A to C, the designation order of those cameras A to C, and the display device by the operator, the control device 20 determines the use of the 4-section pattern, and the section position on the split screen for displaying the videos of the cameras A to C. Based on the determined 4-section pattern, the section position on the split screen, and the designated cameras A to C, the monitor video signal is generated so as to be output to the display device 50.

If the automatic switch screen display is designated, based on the designated cameras and the camera designation order, the control device 20 generates the monitor video signal for executing the automatic switch screen display, which is output to the display device 50.

For example, in response to the operator's designation of the cameras A to C, and the display device, based on the designated cameras A to C, and the designation order of those cameras A to C, the control device 20 generates the monitor video signal which switches videos of the cameras A to C sequentially in this order for display, and outputs the signal to the display device 50.

The display device 50 displays the videos based on the monitor video signal received from the control device 20. For example, in the case of 4-section pattern display as described above, videos taken by the cameras A to C are allocated to 3 among the 4 sections, respectively in accordance with the designation order of those cameras A to C which are displayed on the 3 sections. In the case of automatic switch screen display, videos of the cameras A to C will be automatically switched for displaying each video on the single monitor screen.

In this embodiment, the operator designates a plurality of cameras to be used for monitoring so that the display position on the monitor screen and the display order are determined based on the camera designation order made by the operator.

### (Specific structure of video monitoring system)

The specific structure of the video monitoring system according to the embodiment will be described.

### (Camera)

The camera 10 takes the video of the monitor area, and converts the recorded video into the video signal which is transmitted to the control device 20 and the recording device 30 real time via the network 60. The video signal includes an identifier (for example, camera name, camera No.) for identifying the camera 10 as a transmission source, and information of video record date (year/ month/ day/ hour/ minute/ second).

Preferably, the camera 10 is configured to perform such functions as pan (lateral swing), tilt (vertical swing), and zoom (magnification) based on the instruction from the control device 20. In the case where those functions are available, the camera 10 transmits the pan/tilt/zoom state to the control device 20 as the camera state signal via the network 60. In this embodiment, the camera 10 is configured to include the pan/tilt/zoom function. However, the camera of fixed type with no such function is still available.

### (Display device)

The display device 50 is a monitor device for displaying the video taken by the camera 10. The display device 50 includes a display unit constituted by a display such as an LCD, and a communication unit for communication with the control device 20 via the network 60 so that the monitor video signal received from the control device 20 is displayed. The mode (the number of split screen sections, and the like) is determined by the control device 20 as described later.

As described above, the display device 50 displays the monitor video signal received from the control device 20 (the video signal originated from the camera 10, or from the recording device 30) on the screen. For example, the monitor video signal which is designed to allocate videos from the cameras 10 to the different sections on the split screen, respectively is received from the control device 20 for display.

### (Recording device)

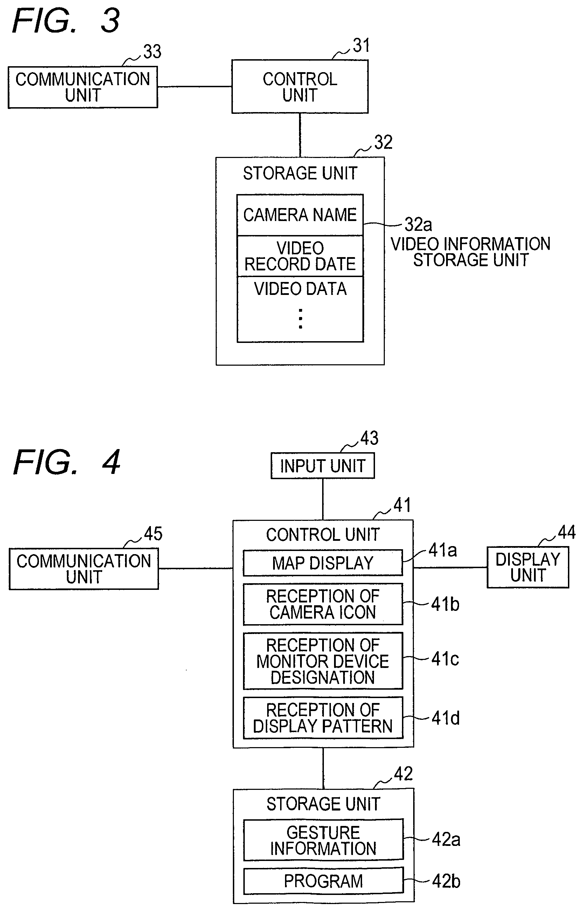

Fig. 3 is a functional block diagram of the recording device according to the embodiment of the present invention. As Fig. 3 shows, the recording device 30 includes a communication unit 33 for communication with the camera 10 and the control device 20 via the network 60, a storage unit 32, and a control unit 31 for controlling the respective components of the recording device 30.

The storage unit 32 constituted by a large-capacity recording medium such as HDD (Hard Disk Drive) and SSD (Solid State Drive) includes a video information storage unit 32a. The video information storage unit 32a is configured to record the video information received from the camera 10 via the network 60. Preferably, it is configured to record the video information data received from all the cameras 10. The video information contains the camera name as the transmission source, information of video record date, and the video data.

The control unit 31 is configured to allow the storage unit 32 to store the video information received from the camera 10 via the communication unit 33. Based on the instruction from the control device 20, the control unit 31 reads the video information stored in the storage unit 32, which is transmitted to the control device 20 via the communication unit 33. It is possible to omit the recording device 30.

### (Operation display device)

Fig. 4 is a functional block diagram of the operation display device according to the embodiment of the present invention. The operation display device 40 may be constituted by a PC (personal computer), for example. Referring to Fig. 4, the operation display device 40 includes an input unit 43 formed as, for example, a touch sensor, a mouse, and the like, a display unit 44 formed as the LCD (Liquid Crystal Display), a communication unit 45 for communication with the control device 20 via the network 60, a storage unit 42, and a control unit 41. The input unit 43 receives various instructions from the operator. The display unit 44 for displaying various information data functions as the monitor device. The control unit 41 controls the respective components of the operation display device 40.

The touch sensor provided over an entire surface of the display unit 44 to constitute the touch panel, which is configured to identify gesture of the operator in association with touching through the surface acoustic wave process or the capacitive sensing method.

For example, in the case of using the touch sensor as the input unit 43, the storage unit 42 stores gesture information 42a and a program 42b. The gesture information 42a represents the information concerning the operation command stored corresponding to the feature of the operator's gesture identified by the touch sensor. The program 42b may be an OS (Operating System), a determination processing program using the gesture information 42a, various application programs, and the like.

The term "gesture" used herein represents the operation accompanied by the operator's touch on the touch sensor, including tapping (touching and releasing), dragging (sliding while keeping touch state), pinch-in (sliding two touched points simultaneously to narrow the distance therebetween), pinch-out (sliding two touched points simultaneously to expand the distance therebetween), swiping (touching for smooth sliding and releasing), and holding (long pressing).

Specific operations of the operation display device 40 resulting from the gesture operation will be described.

Upon gesture operation of the operator applied to the touch sensor, the operator's gesture is identified by the touch sensor. The control unit 41 generates the operation command in reference to the gesture identified by the touch sensor, and the gesture information 42a, and executes the program 42b based on the operation command. The execution results of the program 42b are reflected on the video signal, which is then output to the display unit 44. As a result, the video based on the gesture of the operator is displayed on the display unit 44.

The operation of the operation display device 40 through the operation of the input unit 43, for example, map display and camera icon reception to be described later may be realized by generating the operation command in reference to the information stored in the storage unit 42, and executing the program 42b.

### (Map display unit)

Based on the operator's instruction received through the input unit 43, the control unit 41 sends a request to the control device 20 for the area map of the monitor area, which is stored in an area information storage unit 22c of the control device 20 via the communication unit 45. The area map contains a plurality of camera icons. The area map obtained from the control device 20 via the communication unit 45 is converted into the video signal so as to be output to the display unit 44 for display. In this way, the control unit 41 constitutes a map display unit 41a for displaying the area map that contains the camera icons. The area information storage unit 22c and the area map will be described later.

### (Camera icon reception unit)

In the state where the area map is displayed on the display unit 44, in response to the operator's selection of a plurality of camera icons on the area map sequentially, the control unit 41 receives the selected camera icons, and notifies the control device 20 of information which identifies the selected camera icons, and information which represents the camera icon selection order via the communication unit 45. The control unit 41 serves as the camera icon reception unit 41b.

### (Monitor device designation reception unit)

The control unit 41 receives designation of the monitor device through the input unit 43 operated by the operator, and notifies the control device 20 of any one of the display devices 50 or the display unit 44 of the operation display device 40, designated as the monitor device for displaying the video from the camera 10. The control unit 41 serves as a monitor device designation reception unit 41c.

### (Display pattern reception unit)

The control unit 41 receives the display pattern designation through the input unit 43 operated by the operator, and notifies the control device 20 of the display pattern (split screen display, automatic switch screen display, or multi-page split screen display) based on the display pattern designation. As described above, the control unit 41 serves as a display pattern reception unit 41d.

### (Control device)

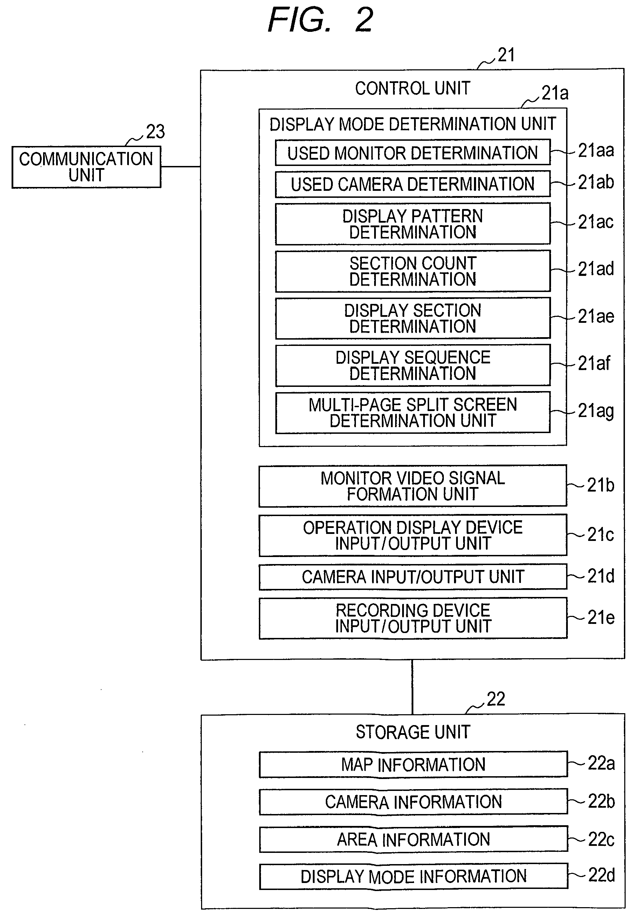

Fig. 2 is a functional block diagram of the control device according to the embodiment of the present invention. As Fig. 2 shows, the control device 20 is configured to include a control unit 21, a storage unit 22, and a communication unit 23. The control device 20 may be constituted by a computer such as a server.

The communication unit 23 performs communication with the camera 10, the display device 50, the operation display device 40, and the recording device 30 via the network 60. Specifically, the communication unit 23 converts a video signal or a control signal output from the control unit 21 into data in the communicative form via the network 60 for output thereto. Then the data are transmitted to the camera 10, the display device 50, the operation display device 40, and the recording device 30. The communication unit 23 outputs the video signal or the control signal to the control unit 21, which has been received from the camera 10, the display device 50, the operation display device 40, and the recording device 30 via the network 60.

The storage unit 22 is constituted by a recording medium such as the semiconductor memory and the hard disk. Referring to Fig. 2, the storage unit 22 includes a map information storage unit 22a, a camera information storage unit 22b, an area information storage unit 22c, and a display mode information storage unit 22d.

The map information storage unit 22a stores map information as a wide range map which contains one or more monitor regions. The camera information storage unit 22b associates data of position information (for example, longitude and latitude) on all the cameras 10 located in the range of the map stored in the map information storage unit 22a with identifiers of the respective cameras 10 so as to be stored as the camera information. The data of the aforementioned map information and the camera information will be appropriately updated by the operator, for example.

The area information storage unit 22c stores at least one area map for each of all the monitor regions (areas) in the range of the map stored in the map information storage unit 22a. The area information storage unit 22c stores area camera information concerning all the cameras 10 positioned in the range of the respective area maps. The area map and the area camera information will be generated by the control unit 21 based on the map information stored in the map information storage unit 22a, and the camera information stored in the camera information storage unit 22b. The control unit 21 will update the aforementioned data every time data of the map information and the camera information are updated.

Each of the area maps is stored through correlation among the identifier for identifying the subject area map, the position information of all the cameras 10 positioned in the range of the subject area map (for example, xy coordinates on the area map), and the identifier of the subject camera 10.

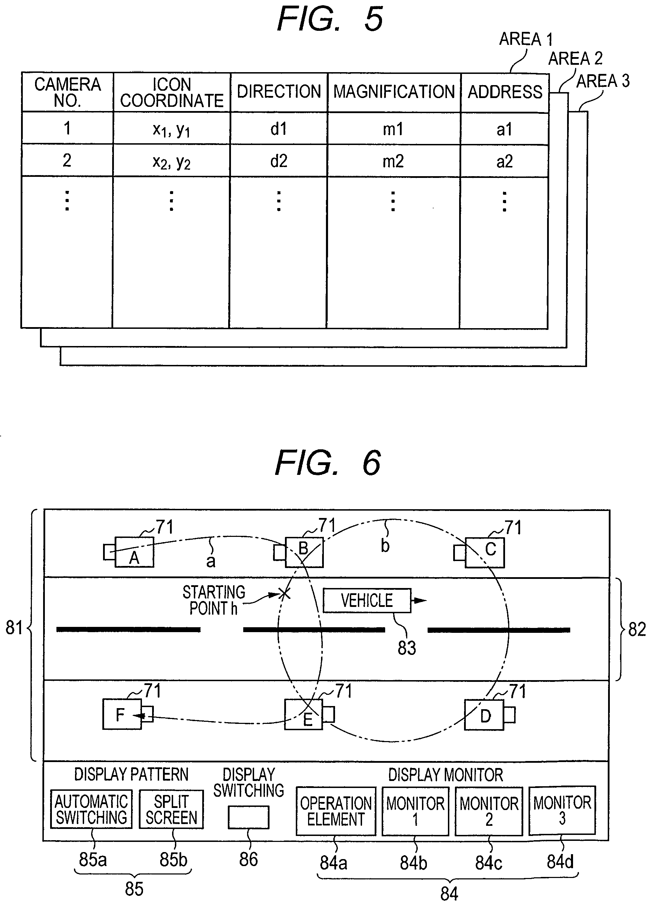

Fig. 5 illustrates a structure of the area camera information according to the embodiment of the present invention. Referring to Fig. 5, the area camera information stores the camera number as the identifier of the camera 10 positioned in the respective areas, the position information (icon coordinates) of the corresponding camera icon on the area map, a video-recording direction of the camera 10, magnification, and communication address (for example, IP address). Referring to an example shown in Fig. 5, the area information storage unit 22c stores the area camera information for the respective areas 1 to 3. For example, the camera No. 1 in the area 1 has the corresponding camera icon coordinates of (x1, y1), the video-recording direction of d1, the magnification of m1, and the communication address of a1.

In the case where the camera 10 is of fixed type with a fixed magnification, the information on the video-recording direction and the magnification is not required.

The data of the area map and the area camera information are transmitted to the operation display device 40 based on the operator's instruction. Then the area map is displayed on the display unit 44 of the operation display device 40. The area map to be displayed on the operation display device 40 illustrates the camera icons at the locations where the corresponding cameras 10 are installed. The camera icons have identifiers (for example, camera name) attached for identifying the corresponding cameras 10.

The display mode information storage unit 22d stores the display mode information as the information on the display mode for the respective monitor devices such as the display device 50. The display mode information contains such information as the display pattern (split screen display, the automatic switch screen display, or multi-page split screen display) for the respective monitor devices, the camera to be used, the number of split sections, the display section position, and the display order. Such information is determined by the display mode determination unit 21a to be described later.

The control unit 21 serves to control the respective components of the control device 20 for communication with the camera 10, the display device 50, and the recording device 30 via the communication unit 23 based on the operator's instruction received by the operation display device 40 so as to control the camera 10, the display device 50, and the recording device 30.

The control unit 21 mainly includes the display mode determination unit 21a, a monitor video signal formation unit 21b, an operation display device input/output unit 21c, a camera input/output unit 21d, and a recording device input/output unit 21e.

The display mode determination unit 21a is configured to determine the monitor device to be used, the camera 10 to be used for displaying the video on the monitor device, and the display pattern (split screen display or automatic switch screen display) on the monitor device in accordance with a used monitor instruction as the operator's instruction for designating the monitor to be used, a used camera instruction as the operator's instruction for designating the camera to be used, and a display pattern instruction as the operator's instruction for designating the display pattern.

As described above, the display mode determination unit 21a includes a used monitor determination unit 21aa, a used camera determination unit 21ab, and a display pattern determination unit 21ac.

If the display pattern is designated as the split screen display, the display mode determination unit 21a determines the number of the split screen sections (the number of sections on the single monitor screen) in accordance with the number of the cameras 10 to be used. In accordance with the camera designation order instructed by the operator, indicating the designation order of the cameras to be used, the display section is determined as the display position of each of the camera videos on the split screen.

The display mode determination unit 21a includes the section count determination unit 21ad, and the display section determination unit 21ae.

In the case where the display pattern is designated as the automatic switch screen display, the display mode determination unit 21a serves as a display sequence determination unit 21af which determines the display order for automatically switching the camera videos in accordance with the camera designation order instruction from the operator, indicating the designation order of the camera to be used.

In the case where the number of the split screen sections is fixed, and the number of cameras 10 designated by the operator exceeds the number of the split screen sections, the display mode determination unit 21a serves as a multi-page split screen determination unit 21ag for arranging videos from the camera in use on the multi-page split screens.

The monitor video signal formation unit 21b serving as the unit configured to generate the monitor video signal for displaying the camera video on the monitor device generates the monitor video signal based on the display mode (display pattern, camera to be used, the number of split screen sections, the display section, the display order, the multi-page split, and the like) determined by the display mode determination unit 21a, and the video signal from the camera 10 to be used or the recording device 30. The unit further transmits the signal to the monitor device designated by the operator through the operation display device 40 via the communication unit 23.

The operation display device input/output unit 21c is configured to control information exchange between the control device 20 and the operation display device 40 so as to receive the used monitor instruction, the used camera instruction, the camera designation order instruction, and the display pattern instruction from the operation display device 40, and transmit instructions to the display mode determination unit 21a.

The operation display device input/output unit 21c reads the area map and the area camera information stored in the area information storage unit 22c in accordance with the operator's instruction received by the operation display device 40, and transmits the data to the operation display device 40 via the communication unit 23. The area map contains position information data of all the cameras 10 positioned in the range of the subject area map as described above.

The camera input/output unit 21d is configured to control the information exchange between the control device 20 and the camera 10 so as to receive the video taken by the camera 10 therefrom, and to transmit the video to the monitor video signal formation unit 21b. The camera input/output unit 21e receives the camera state information from the camera 10 so as to load the pan/tilt/zoom state of the camera 10. The camera input/output unit 21e transmits camera drive information for controlling the pan/tilt/zoom state to the camera 10 in accordance with the operator's instruction concerning the pan/tilt/zoom state received by the operation display device 40. The camera 10 is activated in accordance with the received camera information signal.

The recording device input/output unit 21e is configured to control the information exchange between the control device 20 and the recording device 30 so as to designate the video information stored in the recording device 30, and instruct the recording device 30 to transmit the video information to the control device 20 in accordance with the operator's instruction received by the operation display device 40. The video information transmitted from the recording device 30 is input to the recording device input/output unit 21e, which is then output to the monitor video signal formation unit 21b.

Each of the control unit 21 of the control device 20, the control unit 31 of the recording device 30, and the control unit 41 of the operation display device 40 employs a CPU (Central Processing Unit) and a memory which stores the CPU operation program as hardware structure. The respective CPUs will be operated in accordance with the operation programs.

### (First Example)

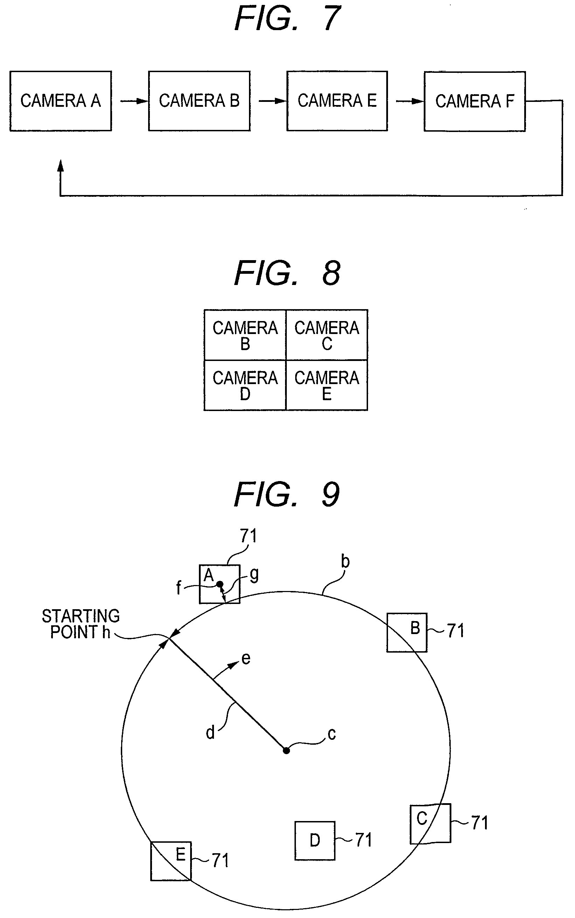

A first example of the embodiment will be described referring to Figs. 6 and 7. In the first example, videos of the cameras 10 designated by the operator are switched at predetermined time intervals (for example, a few seconds) for display in designation order of the cameras 10 without splitting the display screen of the monitor device (display device 50 or the display unit 44 of the operation display device 40).

A mark a of Fig. 6 indicates how the camera is selected according to the first example. Fig. 6 illustrates an area map 81, monitor select buttons 84 used for selecting the monitor device for displaying the video from the camera 10, display pattern select buttons 85, and a display switch button 86 which are displayed on the display unit 44 of the operation display device 40. In this example, the display unit 44 is constituted by the touch panel.

The monitor select buttons 84 include an operation element select button 84a, a monitor 1 select button 84b, a monitor 2 select button 84c, and a monitor 3 select button 84d. Selection from the operation element (display unit 44 of the operation display device 40), the monitor 1 (first display device 50), the monitor 2 (second display device 50), and the monitor 3 (third display device 50) may be made by the operator's pressing of the corresponding button from 84a to 84d.

The display pattern select buttons 85 include an automatic switch select button 85a and a split screen select button 85b. Upon pressing of the automatic switch select button 85a by the operator, the automatic switch screen display is selected as the display pattern. Upon pressing of the split screen select button 85b by the operator, the split screen display is selected. Upon pressing of both the automatic switch select button 85a and the split screen select button 85b by the operator simultaneously, the multi-page split screen display is selected. The split screen display mode will be described later in a second example. The multi-page split screen display will be described later in a third example.

In the first example, the automatic switch screen display is selected by pressing the automatic switch select button 85a. The operator is allowed to switch the display between the state where the area map 81 is displayed and the state where the monitor video is displayed by pressing the display switch button 86.

The area map 81 displays a road 82, a vehicle 83, and camera icons 71 indicating the cameras 10. An arrow attached to the vehicle 83 indicates the traveling direction (forward). Six camera icons 71 from A to F are displayed. The cameras 10 corresponding to the camera icons A to C have lenses directed leftward in Fig. 6. The cameras 10 corresponding to the camera icons D to F have lenses directed rightward in Fig. 6 (forward direction of the vehicle 83).

In the aforementioned state, the operator performs swiping on the touch panel as indicated by the mark a (so as not to form a closed loop). In other words, the operator performs dragging for sliding while maintaining the display unit 44 touched so as not to form the closed loop. As a result, the cameras to be used may be designated on the area map 81. That is, the camera 10 corresponding to the camera icon which exists on the dragged line is determined as the one to be used for display on the monitor device. At this time, the dragging order of the camera icons is determined as the order of displaying videos of the designated cameras.

The control unit 41 of the operation display device 40 determines whether or not the dragging has been performed on the camera icon based on the area map and the area camera information derived from the area information storage unit 22c. Specifically, the coordinate of the dragged position on the touch panel is compared with the icon coordinate in the area camera information. If both the coordinates are in the predetermined range, it is determined that the camera icon exists on the dragged line.

Referring to the example of Fig. 6, as the dragging is performed on the camera icons in the order of A, B, E, F, the control unit 41 of the operation display device 40 determines that the camera icons A, B, E, F are selected by the operator in the order of A → B → E → F. Notice of the information which identifies the selected camera icons A, B, E, F, and the information which indicates the order of selecting those camera icons is sent to the control device 20.

Based on the operator's instruction through the input unit 43, the control unit 41 designates the display device 50 or the display unit 44 of the operation display device 40 as the monitor device for displaying videos from four cameras 10 corresponding to the camera icons A, B, E, F, and notifies the control device 20 of the designation. Based on the operator's instruction through the input unit 43, the control unit 41 notifies the control device 20 of the display pattern (automatic switch screen display).

Based on the notice from the operation display device 40, the control unit 21 of the control device 20 determines the display pattern (automatic switch screen display), the four cameras 10 corresponding to the camera icons A, B, E, F as those to be used, the monitor device for displaying videos from the four cameras 10, and the order of displaying the respective camera videos. Based on the determination, the monitor video signal formation unit 21b of the control device 20 generates the monitor video signal so as to be output to the monitor device (display device 50 or the display unit 44 of the operation display device 40).

The monitor device displays the received monitor video signal. The videos of the cameras 10 corresponding to the camera icons A, B, E, F are sequentially switched in this order at predetermined time intervals of, for example, a few seconds for display.

Fig. 7 represents the automatic switch screen display according to the first example. As Fig. 7 shows, for example, the display device 50 automatically switches videos of the cameras 10 corresponding to the camera icons A, B, E, F automatically in this order every few seconds for display with repetition.

In the first example, the camera icon is selected through dragging. It is also possible to select the camera icon by tapping, for example. In this case, the camera icon selection operation ends upon an elapse of a predetermined time from the last tapping, a double tapping, or reception of the instruction to finish selection of the camera icon from the input unit 43 of the operation display device 40.

The first example is capable of providing at least the following advantageous effects.
(A1) Based on the order of selecting the plurality of cameras, videos of the selected cameras may be automatically switched for display on the single screen of the monitor device. In other words, the cameras are sequentially selected in the order desired for monitoring so that the videos desired for monitoring are displayed in the desired order.
(A2) The plurality of cameras are selected by dragging. This allows both selection of the cameras and designation of the order of camera videos with ease.
(A3) The operator is allowed to select either the display device 50 or the display unit 44 of the operation display device 40 as the monitor device. Therefore, it is possible to select the camera 10 and to adjust the video recording direction of the camera 10 with ease so that the monitor videos are sufficiently observable on the operation display device 40. In the case where the operation display device 40 and the display device 50 are remotely disposed, the monitor video may be observed by the display device 50 for monitoring after confirming as to sufficient visibility of the monitor videos on the operation display device 40.

### (Second Example)

A second example of the embodiment will be described referring to Figs. 6, 8 and 9. The second example is configured to optimally determine the number of the split screen sections of the monitor device in accordance with the number of the cameras 10 designated by the operator. It is also configured to determine display positions of videos of the respective cameras 10 on the split screen of the monitor device in accordance with the designation order of the cameras 10 made by the operator. In the second example, 3 patterns of the number of the split screen sections of the monitor device, that is, 4 sections, 9 sections, and 16 sections are preliminarily set, for example. The optimum number of the split screen sections is selected from those 3 patterns. Typically, the number of the split screen sections may be set to a value of factorial of integer, for example, 1, 25, 36, 49, 64 and the like. In the second example, the split screen display is selected as the display pattern by pressing the split screen select button 85b.

The mark b of Fig. 6 indicates how the camera is selected according to the second example. An explanation of the second example will be omitted as it is substantially the same as the first example except the mark b. In the second example, likewise the first example, the camera may be selected as indicated by the mark a. Conversely, in the first example, the camera may be selected as indicated by the mark b.

Referring to the mark b of Fig. 6, the operator swipes to form the closed loop into a circle (circular shape), for example, that is, dragging for sliding while maintaining the display unit 44 touched so that the camera to be used for the area map 81 is designated. The cameras 10 corresponding to the camera icons within the circle are determined as those used for monitor display. In this case, the display positions of videos of the respective cameras to be displayed on the split screen of the monitor device are determined in accordance with the dragging order from the starting point h of the closed loop (in this example, clockwise order).

The aforementioned closed loop may be elliptical, triangular, rectangular and any other polygonal shapes besides the circular shape.

Referring to the example of Fig. 6, the cameras 10 corresponding to the encircled camera icons B, C, D, E are determined as those used for monitor display. As four cameras are to be used, 4-split screen having 4 sections is used as the split screen on the monitor device. If six camera icons are encircled, 9-split screen having 9 sections is used. In this case, the camera videos are displayed on 6 of the 9 sections as the 9-split screen, and no camera videos are displayed on the 3 sections.

Referring to the example of Fig. 6, the order of the camera icons B, C, D, E is set from the starting point h so that display positions (sections for displaying videos) of the videos of the cameras 10 corresponding to the camera icons B, C, D, E are determined. Fig. 8 is a view illustrating the split screen display according to the second example. Referring to the example of Fig. 8, the display positions of the cameras to be used are determined in the order of upper left section, upper right section, lower left section, and lower right section on the split screen of the monitor device. Alternatively, it may be configured to determine the display positions of the cameras to be used in another order of, for example, the upper left section, the lower left section, the upper right section and the lower right section on the split screen of the monitor device.

The camera selection method according to the second example will be described in detail hereinafter. Fig. 9 is an explanatory view representing the camera selection method of the second example in detail.

In the case where the operator encircles the plurality of camera icons by dragging on the touch panel of the operation display device 40, the control unit 41 of the operation display device 40 determines as to which icons have been encircled.

Specifically, assuming that the center coordinate of the camera icon (see Fig. 5) is outside the circle, if the distance between the center coordinate of the camera icon and the trace of the circle is in a predetermined range, it is determined that the camera icon is encircled. Referring to Fig. 9, if the distance g between the center coordinate f of the camera icon A and the trace b of the circle is in the predetermined range, it is determined that the camera icon A is encircled.

Referring to the example of Fig. 9, assuming that straight line d formed by connecting the center point c of the circle and the starting point h of the circle is rotated at 360° with respect to the center point c of the circle on the trace b toward the direction e where the circle is dragged, the straight line d passes the camera icons sequentially in the order of A, B, C, D, E. The control unit 41 of the operation display device 40 determines the order from the starting point h as the order of selecting the camera icons.

Then the control unit 41 of the operation display device 40 notifies the control device 20 of the information for identifying the encircled camera icons, and the information indicating the order of selecting the camera icons. The control unit 21 of the control device 20 determines the camera 10 corresponding to the encircled camera icon as the one to be used for monitor display. The control unit 21 determines the number of the split screen sections of the monitor device based on the number of the selected camera icons. The control unit 21 determines display positions of the respective camera videos on the split screen of the monitor device based on the order of selecting the camera icons. In other words, the sections of the split screen on which the respective camera videos are displayed are determined. Based on the determination, the monitor video signal formation unit 21b of the control device 20 generates the monitor video signal so as to be output to the monitor device (display device 50 or the display unit 44 of the operation display device 40).

The monitor device displays the received monitor video signal. As Fig. 8 shows, videos of the cameras 10 corresponding to the camera icons B, C, D, E are displayed on the respective sections on the split screen of the monitor device.

It is preferable to be configured that selection of the camera icons indicated by the mark b of Fig. 6 is explicitly displayed. In other words, it is preferable to display so that the selected camera icons are easily distinguished from those non-selected. For example, the selected camera icons are differently colored from those non-selected. This makes it possible to clarify whether or not the icon has been selected, thus suppressing the icon selection error made by the operator.

Preferably, upon selection of the camera icon, the total number of the selected camera icons is displayed above or close to the last selected camera icon, for example. This makes it possible to easily set the total number of the selected camera icons to be equal to or smaller than the preset number of split screen sections. For example, assuming that the total number of the selected camera icons is 10, the number of the split screen sections is set to 16. As a result, each size of sections becomes small, resulting in difficulty in observation. Meanwhile, in the case where the total number of the selected camera icons is suppressed to 9, the number of the split screen sections is set to 9. Accordingly, each size of sections becomes large, resulting in easy observation.

Upon selection of the camera icon, in the case where the total number of the selected camera icons becomes equal to the preset number of split screen sections, it is preferable to display such information on the display unit 44. This makes it possible to easily set the total number of the selected camera icons to be equal to or smaller than the preset number of the split screen sections.

The second example is capable of providing at least the following advantageous effects.
(B1) It is possible to set the appropriate number of the split screen sections on the single screen of the monitor device in accordance with the number of selected cameras. Accordingly, videos of all the selected cameras may be observed on the single screen of the monitor device. Additionally, each size of the sections may be sufficiently large for easy observation.
(B2) Based on the order of selecting the plurality of cameras, it is possible to set the positions of the camera videos (section position) on the split screen of the monitor device. In other words, the cameras are sequentially selected in the order in accordance with the section position on the split screen so that the video desired for monitoring is observable at the desired section position.
(B3) The plurality of cameras are selected by forming the closed-loop, which allows easy selection of the camera and designation of display positions of the camera videos on the split screen.
(B4) In the case where the selected camera icons are displayed while being distinguished from those non-selected upon selection of the camera icons, it will make clear whether or not the icon has been selected. This makes it possible to suppress the icon selection error made by the operator.
(B5) In the case where the total number of the selected camera icons is displayed upon selection thereof, the total number of the selected camera icons may be easily set to be equal to or smaller than the preset number of the split screen sections.
(B6) In the case where the display unit 44 displays the information representing that the total number of the selected camera icons has reached the preset number of the split screen sections upon selection of the camera icons, the total number of the selected camera icons may be easily set to be equal to or smaller than the preset number of the split screen sections.

### (Third Example)

A third example of the embodiment will be described. The third example is configured that the number of the split screen sections of the monitor device is fixed to a certain value, for example, 4. In the case where the number of the cameras 10 designated by the operator exceeds the number of the split screen sections, the multi-page split screens are provided so that the multi-page screens are automatically switched for display. In accordance with the order of designation of the cameras 10 made by the operator, the video display positions (section position) of the cameras 10 on the split screen of the monitor device are determined.

The camera selection method of the third example is established by pressing the automatic switch select button 85a and the split screen select button 85b shown in Fig. 6 simultaneously. In this case, preferably, the number of the split screen sections of the monitor device is set to a desired value through the input unit 43 of the operation display device 40.

Fig. 10 illustrates the automatic switch screen display according to the third example on the assumption that the operator has designated 6 camera icons A to F in this order, and the number of the split screen sections of the monitor device is fixed to 4. Accordingly, there are split screens in a plurality of pages as shown in Figs. 10 (a) and 10(b), which will be automatically switched for display with repetition. As Fig. 10 (a) shows, videos of the cameras corresponding to the camera icons A to D are respectively displayed on 4 sections of the split screen on the first page. After a few seconds, the videos of the cameras 10 corresponding to the camera icons E, F are displayed on 2 of the 4 sections of the split screen on the second page.

In the third example, the camera icon designation method described in the first example (dragging without forming the closed loop), or the second example (dragging while forming the closed loop) may be applied to the method through which the operator designates the camera icon. The display positions of the camera videos on the split screen of the monitor device are determined in accordance with the designation order of the camera icons.

The control unit 41 of the operation display device 40 notifies the control device 20 of the information for identifying the camera icon designated by the operator, and the information indicating the camera icon designation order. The control unit 21 of the control device 20 determines the camera 10 corresponding to the camera icon notified from the operation display device 40 as the one to be used for monitor display, and further determines the display positions of the camera videos on the split screens of the monitor device.

In the case where the number of the camera icons designated by the operator is equal to or smaller than the number of the split screen sections of the monitor device, the control unit 21 determines to set the single page for the split screen so as not to be automatically switched. In the case where the number of the camera icons designated by the operator exceeds the number of the split screen sections of the monitor device, the control unit 21 determines to set a plurality of pages for split screens so as to be automatically switched. In this example, as the number of the camera icons (6) designated by the operator exceeds the number of the split screen sections (4) of the monitor device, the control unit 21 sets 2 split screen pages so as to be automatically switched.

Based on the determination as described above, the control unit 21 of the control device 20 generates the monitor video signal so as to be output to the monitor device (display device 50 or display unit 44 of the operation display device 40).

The monitor device displays the received monitor video signal so that the screen pages shown in Figs. 10(a) and 10(b) are automatically switched for display with repetition.

The third example is capable of providing at least the following advantageous effects.
(C1) The appropriate number of the split screen pages of the monitor device may be set in accordance with the number of the selected cameras. In the case where the plurality of split screen pages are set, the split screens are automatically switched for display. This makes it possible to set each size of sections on the split screen to be large sufficient for observation regardless of the number of the selected cameras.
(C2) Positions of the camera videos on the split screen of the monitor device may be set in accordance with the order of selecting the cameras. That is, the cameras are sequentially selected in the order in accordance with section positions on the split screen so as to allow observation of the video desired for monitoring on the desired section.

The present invention is not limited to the above-described embodiment, but may be modified in various forms without departing from the scope of the invention. The respective components described in the examples may be arbitrarily combined as necessary.

The first to the third examples may be appropriately combined. For example, the video monitoring system of the present invention may be configured to implement at least one of the first to the third examples. Alternatively, it may be configured to implement all of the first to the third examples.

In the aforementioned embodiment, the operation display device 40 and the control device 20 are provided separately. It is possible to omit the control device 20 by combining its functions with the operation display device 40. It is also possible to integrate the recording device 30 with the control device 20.

The aforementioned embodiment is configured that the control device 20 generates the monitor video signal. It is possible to allow the display device 50 and the operation display device 40 to generate the monitor video signal in place of the control device 20.

In the aforementioned embodiment, the monitor videos may be displayed on the display device 50 and the operation display device 40. It is possible to allow only the display device 50 to display the monitor video while making the operation display device 40 disabled for displaying the monitor video. It is also possible to omit the display device 50, and allow only the operation display device 40 to display the monitor video.

### Industrial Applicability

The present invention is applicable to the video monitoring system using monitor cameras.

### List of Reference Signs

10: camera, 20: control device, 21: control unit, 21a: display mode determination unit, 21aa: used monitor determination unit, 21ab: used camera determination unit, 21ac: display pattern determination unit, 21ad: section count determination unit, 21ae: display section determination unit, 21af: display sequence determination unit, 21ag: multi-page split screen determination unit, 21b: monitor video signal formation unit, 21c: operation display device input/output unit, 21d: camera input/output unit, 21e: recording device input/output unit, 22: storage unit, 22a: map information storage unit, 22b: camera information storage unit, 22c: area information storage unit, 22d: display mode information storage unit, 23: communication unit, 30: recording device, 31: control unit, 32: storage unit, 32a: video information storage unit, 33: communication unit, 50: display device, 40: operation display device, 41: control unit, 41a: map display unit, 41b: camera icon reception unit, 41c: monitor device designation reception unit, 41d: display pattern reception unit, 42: storage unit, 42a: gesture information, 42b: program, 43: input unit, 44: display unit, 45: communication unit, 50: display device, 60: network, 71: camera icon, 72: starting point, 81: area map, 82: road, 83: vehicle, 84: display monitor select button, 84a: operation element select button, 84b: monitor 1 select button, 84c: monitor 2 select button, 84d: monitor 3 select button, 85: display pattern select button, 85a: automatic switch select button, 85b: split screen select button, 86: display switch button

## Claims

1. A video monitoring system comprising:
a monitor device for displaying a video taken by a camera;
a map display unit for displaying a map which contains a plurality of camera icons;
a camera icon reception unit for receiving the plurality of camera icons on the map displayed by the map display unit, which have been selected by an operator sequentially;
a used camera determination unit for determining the camera corresponding to the camera icon received by the camera icon reception unit as a camera used for video display on the monitor device;
a section count determination unit for determining the number of split screen sections of the monitor device in accordance with the number of the camera icons received by the camera icon reception unit; and
a monitor video signal forming unit for generating a monitor video signal used for the monitor device based on the used camera determined by the used camera determination unit, and the number of split screen sections determined by the section count determination unit.

2. The video monitoring system according to claim 1, further comprising a display section determination unit for determining a display section on the split screen of the monitor device in accordance with a reception order of the camera icons received by the camera icon reception unit.

3. A video monitoring system comprising:
a monitor device for displaying a video taken by a camera;
a map display unit for displaying a map which contains a plurality of camera icons;
a camera icon reception unit for receiving the plurality of camera icons on the map displayed by the map display unit, which have been selected by an operator sequentially;
a used camera determination unit for determining the camera corresponding to the camera icon received by the camera icon reception unit as a camera used for video display on the monitor device;
a display section determination unit for determining a display section on a split screen of the monitor device in accordance with a reception order of the camera icons received by the camera icon reception unit; and
a monitor video signal formation unit for generating a monitor video signal used for the monitor device based on a used camera determined by the used camera determination unit, and the display section determined by the display section determination unit.

4. The video monitoring system according to claim 3, wherein the number of split screen sections on the monitor device is fixed.

5. The video monitoring system according to claim 4, further comprising a multi-page split screen determination unit for arranging videos from the used cameras on multi-page split screens if the number of the camera icons received by the camera icon reception unit exceeds the number of the split screen sections.

6. A video monitoring system comprising:
a monitor device for displaying a video taken by a camera;
a map display unit for displaying a map which contains a plurality of camera icons;
a camera icon reception unit for receiving the plurality of camera icons on the map displayed by the map display unit, which have been selected by an operator sequentially;
a used camera determination unit for determining the camera corresponding to the camera icon received by the camera icon reception unit as a camera used for video display on the monitor device;
a display order determination unit for determining an automatic switch order of videos on the screen of the monitor device in accordance with a reception order of the camera icons received by the camera icon reception unit; and
a monitor video signal formation unit for generating a monitor video signal used for the monitor device based on the used camera determined by the used camera determination unit, and a display order determined by the display order determination unit.

7. The video monitoring system according to claims 1 to 6, wherein the camera icon reception unit receives the plurality of camera icons sequentially selected on the map through a dragging operation performed by an operator without forming a closed loop.

8. The video monitoring system according to claims 1 to 6, wherein the camera icon reception unit receives the plurality of camera icons sequentially selected on the map through a dragging operation performed by an operator while forming a closed loop.

9. A video display method of displaying a video taken by a camera on a monitor device, comprising:
a map display step for displaying a map which contains a plurality of camera icons;
a camera icon reception step for receiving the plurality of camera icons on the map displayed in the map display step, which have been selected by an operator sequentially;
a used camera determination step for determining the camera corresponding to the camera icon received in the camera icon reception step as a camera used for video display on the monitor device;
a section count determination step for determining the number of split screen sections of the monitor device in accordance with the number of the camera icons received in the camera icon reception step; and
a monitor video signal formation step for generating a monitor video signal used for the monitor device based on the used camera determined in the used camera determination step, and the number of split screen sections determined in the section count determination step.

10. The video display method according to claim 9, further comprising a display section determination step for determining a display section on the split screen of the monitor device in accordance with a reception order of the camera icons received in the camera icon reception step.

11. A video display method of displaying a video taken by a camera on a monitor device, comprising:
a map display step for displaying a map which contains a plurality of camera icons;
a camera icon reception step for receiving the plurality of camera icons on the map displayed in the map display step, which have been selected by an operator sequentially;
a used camera determination step for determining the camera corresponding to the camera icon received in the camera icon reception step as a camera used for video display on the monitor device;
a display section determination step for determining a display section on a split screen of the monitor device in accordance with a reception order of the camera icons received in the camera icon reception step; and
a monitor video signal formation step for generating a monitor video signal used for the monitor device based on the used camera determined in the used camera determination step, and the display section determined in the display section determination step.

12. The video display method according to claim 11, wherein the number of split screen sections on the monitor device is fixed.

13. The video display method according to claim 12, further comprising a multi-page split screen determination step for arranging videos from the used cameras on multi-page split screens if the number of the camera icons received in the camera icon reception step exceeds the number of the split screen sections.

14. A video display method of displaying a video taken by a camera on a monitor device, comprising:
a map display step for displaying a map which contains a plurality of camera icons;
a camera icon reception step for receiving the plurality of camera icons on the map displayed in the map display step, which have been selected by an operator sequentially;
a used camera determination step for determining the camera corresponding to the camera icon received in the camera icon reception step as a camera used for video display on the monitor device;
a display order determination step for determining an automatic switch order of videos on the screen of the monitor device in accordance with a reception order of the camera icons received in the camera icon reception step; and
a monitor video signal formation step for generating a monitor video signal used for the monitor device based on the used camera determined in the used camera determination step, and a display order determined in the display order determination step.

15. The video display method according to claims 9 to 14, wherein in the camera icon receptions step, upon selection of the plurality of camera icons sequentially on the map through a dragging operation performed by the operator without forming a closed loop, the selected plurality of camera icons are received.

16. The video display method according to claims 9 to 14, wherein in the camera icon reception step, upon selection of the plurality of camera icons sequentially on the map through a dragging operation performed by the operator while forming a closed loop, the selected plurality of camera icons are received.
